# EUROPEAN PATENT APPLICATION

(11) **EP 4 389 274 A1**
(43) Date of publication of application: **26.06.2024**
(21) Application number: 22216622.5
(22) Date of filing: 23.12.2022
(51) Int. Cl.: B01J 8/02

(54) **PROCESS FOR PRODUCING SYNTHESIS GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: LUTZ, Michael, 60439 Frankfurt am Main (DE); COSCIA, Antonio, 60439 Frankfurt am Main (DE); ULBER, Dieter, 60439 Frankfurt / Main (DE)
(74) Representative: Air Liquide

(57) **Abstract**

An apparatus for producing a synthesis gas product comprising hydrogen by an endothermic reaction of a gas feedstock stream, said apparatus comprising:
- A cylindrical reaction tank delimited by a cylinder shell, said cylinder shell having an inner layer comprising:
∘ A feedstock gas circulation duct delimited by the inner layer,
∘ A flue gas circulation tube arranged for the circulation of a flue gas stream and for a heat transfer from the flue gas circulation tube to the feedstock gas circulation duct,

- A burner arranged outside the cylindrical reaction tank, said burner being configured to burn a fuel gas stream and produce the flue gas stream, said burner being fluidically connected to the flue gas circulation tube.

## Description

The field of the present invention is that of an apparatus for producing synthesis gas product. The invention relates particularly to an apparatus for producing a synthesis gas product comprising hydrogen by an endothermic cracking reaction of an ammonia gas feedstock stream. The invention also relates to the use of such an apparatus.

Usually, the production of a hydrogen-comprising synthesis gas by an endothermic cracking reaction of an ammonia gas feedstock stream requires heat and is thus performed in a furnace. The furnace is equipped with burners which supply the energy for the endothermic reaction via combustion of a fuel.

Such a furnace requires a lot of space and is complex to assemble. Furthermore, the heat transfer from the furnace to the endothermic reaction is a critical point for performing the endothermic reaction in the furnace. Indeed, the temperature in the furnace has to be significantly higher than in the catalyst.

The invention proposes an apparatus for producing a synthesis gas product comprising hydrogen by an endothermic reaction of a gas feedstock stream, said apparatus comprising:
- A cylindrical reaction tank delimited by a cylinder shell, said cylinder shell having an inner layer comprising:
   ∘ A feedstock gas circulation duct delimited by the inner layer,
   ∘ A flue gas circulation tube arranged for the circulation of a flue gas stream and for a heat transfer from the flue gas circulation tube to the feedstock gas circulation duct,
- A burner arranged outside the cylindrical reaction tank, said burner being configured to burn a fuel gas stream in a combustion zone and produce the flue gas stream, said burner being fluidically connected to the flue gas circulation tube.

Such an apparatus allows to perform an endothermic reaction without using a bulky furnace. Furthermore, the temperature of the endothermic reaction is homogenous due to better heat distribution from the flue gas circulation tube to the feedstock gas circulation duct. Furthermore, the apparatus of the invention allows the reduction of heat lost to the environment.

According to one aspect of the invention, the cylinder shell is configured for the circulation of the feedstock gas stream in a pressurized state.

According to one aspect of the invention, the flue gas circulation tube is separated from the feedstock gas circulation duct by a wall, said wall being configured to allow heat exchanges between the flue gas circulation tube and the feedstock gas circulation duct. In other words, the flue gas circulation tube is delimited by a thermal conductive layer.

According to one aspect of the invention, the flue gas circulation tube is arranged inside the feedstock gas stream circulation duct.

According to one aspect of the invention, the flue gas circulation tube is fixed to a support configured to carry said flue gas circulation tube.

According to one aspect of the invention, the flue gas circulation tube is embedded in the support by one of its extremities.

According to one aspect of the invention, the apparatus comprises a plurality of flue gas circulation tubes, said flue gas circulation tubes extending axially parallel.

According to one aspect of the invention, each of the flue gas circulation tubes are fixed to the support arranged to carry said flue gas circulation tube.

According to one aspect of the invention, each of the flue gas circulation tube are embedded in the support by one of their extremities.

According to one aspect of the invention, the flue gas circulation tube and the feedstock gas circulation duct are arranged in a co-annular manner. In other words, the feedstock gas circulation duct surrounds circumferentially the flue gas circulation tube.

According to one aspect of the invention, the feedstock gas circulation duct comprises a reaction zone filled with a catalyst, configured to allow an endothermic cracking reaction of the feedstock gas. The configuration according to the invention improves the heat transfer to the catalyst and filling the reaction zone with the catalyst is easier than in the prior art.

According to one aspect of the invention, the apparatus comprises a preheating zone, said preheating zone being arranged for pre-heating the feedstock gas stream, said pre-heating zone being arranged upstream the reaction zone in the direction of the feedstock gas stream circulation direction.

According to one aspect of the invention, the pre-heating zone and the reaction zone are arranged to receive heat from the flue gas circulating in the flue gas circulation tube.

According to one aspect of the invention, the cylindrical reaction tank comprises a flue gas inlet for the inlet of the flue gas into the cylindrical reaction tank from the combustion zone.

According to one aspect of the invention, the burner comprises a flue gas exhaust duct, for the discharge of the flue gas.

According to one aspect of the invention, the flue gas inlet comprises a flange configured to fasten and fluidically connect the flue gas exhaust duct to the flue gas inlet.

According to one aspect of the invention, the flue gas circulation tube comprises a flue gas entry fluidically connected to the flue gas inlet, said flue gas entry being configured for the circulation of the flue gas in the flue gas circulation tube.

According to one aspect of the invention, each of the flue gas circulation tube comprises a flue gas entry.

According to one aspect of the invention, the pre-heating zone is arranged in the cylindrical reaction tank between the reaction zone and the flue gas inlet.

According to one aspect of the invention, the reaction zone is arranged in the cylindrical reaction tank between the flue gas inlet and the pre-heating zone.

According to one aspect of the invention, the pre-heating zone is superposed to the reaction zone.

According to one aspect of the invention, the cylindrical reaction tank comprises a distribution manifold configured to distribute the flue gas from the flue gas inlet to the flue gas entry.

According to one aspect of the invention, the distribution manifold is located downstream the burner and upstream the flue gas circulation tube in the flue gas flow circulation direction.

According to one aspect of the invention, the flue gas entry is fluidically connected to the distribution manifold.

According to one aspect of the invention, the distribution manifold is delimited by a lid and the support flue gas circulation tube, said support comprising apertures connected to the flue gas entry.

According to one aspect of the invention, the support is a sheet.

According to one aspect of the invention, the distribution manifold comprises a port arranged to feed said distribution manifold with the flue gas from the burner.

According to one aspect of the invention, the cylindrical reaction tank comprises a flue gas outlet for the outlet of the flue gas outside the cylindrical reaction tank.

According to one aspect of the invention, the cylindrical reaction tank is configured to make the flue gas stream circulate from flue gas inlet to the flue gas entry of the flue gas circulation tube, the flue gas circulation tube being arranged for the circulation of flue gas along said flue gas circulation tube in a first direction, and the circulation of the flue gas along said flue gas circulation tube in an opposite direction, to the flue gas outlet.

According to one aspect of the invention, the flue gas circulation tube is fixed to the support by only one of its extremities, the other extremity opposed to said fixed extremity being a free extremity. This allows the flue gas tube to expand due to the high temperature reaction, without putting stress on the cylindrical reaction tank.

In a preferred embodiment, the flue gas circulation tube is embedded in the support by only one of its extremities, the other extremity opposed to said embedded extremity being a free extremity.

According to one aspect of the invention, the flue gas circulation tube comprises a baffle arranged to form a turn in said flue gas circulation tube.

In one aspect of this invention, the baffle is arranged to make the flue gas circulate inside the tube in a first direction, modify the direction of the flue gas flow so as to make the flue gas circulate inside the tube in a second direction opposite to the first one.

In particular, the baffle is arranged to modify the direction of the flue gas flow near an extremity of the flue gas circulation tube.

According to one aspect of the invention, the flue gas circulation tube is configured to make the flue gas stream circulates in a first portion of said flue gas circulation tube between the flue gas entry and the turn in a first direction.

According to one aspect of the invention, the flue gas circulation tube is configured to make the flue gas stream circulates in a second portion of said flue gas circulation tube between the turn and the outlet in an opposite direction to the first direction.

According to one aspect, the flue gas circulation tube is arranged to discharge heat of the flue gas to the feedstock gas circulation duct in the first portion and thus to obtain a cooled flue gas which circulates in the second portion of the flue gas circulation tube.

According to one aspect of the invention, the baffle is an inner baffle arranged inside the flue gas circulation tube.

According to one aspect of the invention, the baffle is arranged to make the flue gas stream circulates in countercurrent in the flue gas circulation tube.

According to one aspect of the invention, the baffle comprises an inner tube arranged inside de flue gas circulation tube.

According to one aspect of the invention, the inner tube is made of a thermal insulating material. Hence, the heat exchange between the feedstock gas circulation duct and the flue gas circulation tube is optimized.

According to one aspect of the invention, the cylindrical reaction tank comprises a synthesis gas product collector arranged to collect the synthesis gas product produced in the reaction zone, said collector comprising a synthesis gas product outlet.

According to one aspect of the invention, the collector is delimited by a convex bottom.

According to one aspect of the invention, the synthesis gas product collector is arranged in the cylindrical reaction tank between the reaction zone and the synthesis gas product outlet.

According to one aspect of the invention, the apparatus comprises a feedstock gas inlet for the inlet of the feedstock gas into the feedstock gas circulation duct.

According to one aspect of the invention, the feedstock gas inlet is arranged at an extremity of the feedstock gas circulation duct and the synthesis gas product outlet is arranged at an opposite extremity of said extremity of the feedstock gas circulation duct. According to one aspect of the invention, the feedstock gas inlet is arranged at an extremity of the feedstock gas circulation duct, said extremity being at the pre-heating zone of the feedstock circulation duct.

According to one aspect of the invention, the feedstock gas stream and the synthesis gas product circulate in a single direction.

According to one aspect of the invention, flue gas inlet is located outside the cylindrical reaction tank on the reaction zone side.

According to one aspect of the invention, the flue gas inlet is at the same side as the feedstock gas inlet. Thus, the flue gas stream circulates first along the pre-heating zone of the feedstock gas circulation duct for pre-heating the feedstock gas stream upstream the reaction zone.

According to one aspect of the invention, the burner is located outside the cylindrical reaction tank on the pre-heating zone side.

According to one aspect of the invention, the flue gas inlet is arranged at a side of the cylindrical reaction tank which is opposite to the feedstock gas inlet side. Thus, the flue gas stream circulates first along the reaction zone of the feedstock gas circulation duct for heating directly said reaction zone.

According to one aspect of the invention, the burner is located outside the cylindrical reaction tank on the zone side opposite to the feedstock gas inlet zone side.

The invention also related to the use of such an apparatus for producing a synthesis gas product comprising hydrogen by an endothermic cracking reaction of an ammonia feedstock stream.

Further features, details and advantages of the invention will become more clearly apparent from reading the description given below by way of indication with reference to the drawings, in which:
[FIG. 1] is a schematic representation of the apparatus of the invention according to a first embodiment,
[Fig. 2] is a sectional view of the apparatus of the invention according to the first embodiment in figure 1,
[FIG. 3] is a schematic representation of the apparatus of the invention according to a second embodiment,
[Fig. 4] is a sectional view of the apparatus of the invention according to the second embodiment in figure 3.

It should first of all be noted that the figures disclose the invention in a detailed manner so as to implement the invention, and said figures may of course serve to define the invention more clearly, where necessary.

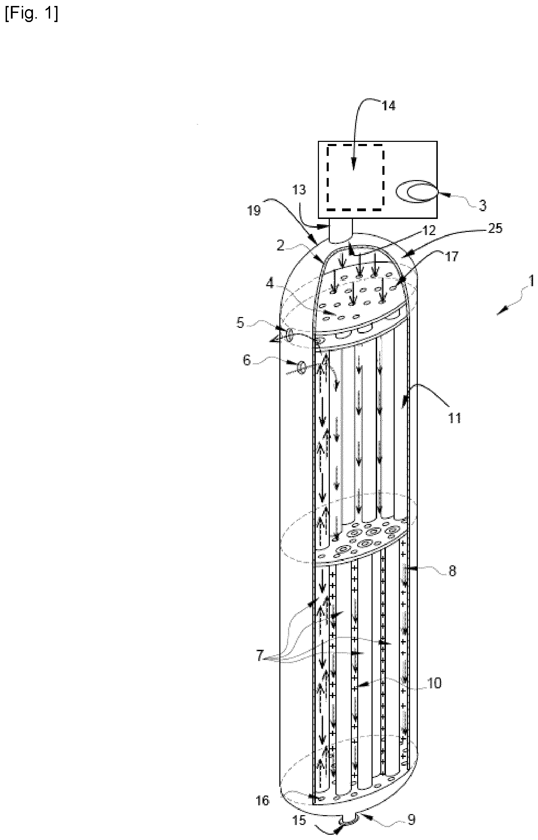

Figure 1 shows an apparatus 1 for producing a synthesis gas product comprising hydrogen by an endothermic reaction of a feedstock gas stream. In this embodiment, the apparatus comprises:
- A cylindrical reaction tank 2 delimited by a cylinder shell, said cylinder shell having an inner layer 11 comprising:
   ∘ A feedstock gas circulation duct 8 delimited by the inner layer 11,
   ∘ A flue gas circulation tube 7 arranged for the circulation of a flue gas stream and for a heat transfer from the flue gas circulation tube 7 to the feedstock gas circulation duct 8,
- A burner 3 arranged outside the cylindrical reaction tank 2, said burner 3 being configured to burn a fuel gas stream and produce the flue gas stream, said burner 3 being fluidically connected to the flue gas circulation tube 7.

The burner 3 comprises a combustion chamber 14 in which a fuel gas stream is burned into the flue gas, and a flue gas exhaust duct 13 which conducts the flus gas from the burner 3 to a flue gas inlet 12 of the cylindrical reaction tank 2. The flue gas inlet 12 is for the inlet of the flue gas into the cylindrical reaction tank 2 from the combustion zone 14. The flue gas inlet 12 comprises a flange configured to fasten and fluidically connect the flue gas exhaust duct 13 to the flue gas inlet 12.

The cylindrical reaction tank 2 comprises a flue gas outlet 5 for the outlet of the flue gas outside the cylindrical reaction tank 2. The cylindrical reaction tank 2 is configured to make the flue gas stream circulate from flue gas inlet 12 to a flue gas entry 17 of the flue gas circulation tube 7. Then, the flue gas circulation tube is arranged for the circulation of flue gas along said flue gas circulation tube 7 in a first direction, and the circulation of the flue gas along said flue gas circulation tube in an opposite direction, to the flue gas outlet 5.

The flue gas inlet 13 is arranged in a flue gas distribution manifold 19 arranged to distribute the flue gas from the flue gas inlet 12 to the flue gas entry 17 of the flue gas circulation tube 7. The flue gas entry 17 is fixed to a support 4 which is configured to carry the flue gas circulation tubes 7. In this embodiment, the apparatus 1 comprises a plurality of flue gas circulation tubes 7 arranged parallelly, said flue gas circulation tubes being carried by the support 4. Thus, the support 4 comprises a plurality of apertures connected to each flue gas entry 17. The distribution manifold is delimited by a lid 25 and the support 4.

The flue gas stream circulates here in the flue gas circulation tubes 7, said flue gas circulation tubes 7 being arranged for heat exchange between the feedstock gas circulation duct 8 and the flue gas circulation tubes 7. Indeed, the flue gas circulation tubes 7 are made of a thermal conductive material.

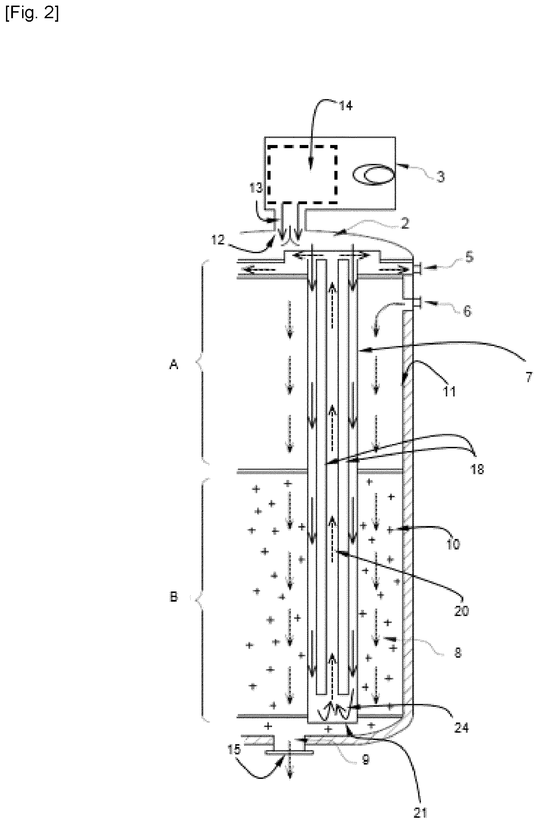

As shown in figure 2, the flue gas circulation tubes 7 comprises a baffle 18 arranged to make to form a turn 24 in said flue gas circulation tube 7. The baffle 18 is arranged to make the flue gas circulate inside the flue gas circulation tube 7 in a first direction, modify the direction of the flue gas flow so as to make the flue gas circulate inside the flue gas circulation tube 7 in a second direction opposite to the first one. In particular, the baffle 18 is arranged to modify the direction of the flue gas flow near an extremity of the flue gas circulation tube.

The baffle 18 is here an inner tube arranged inside the flue gas circulation tube. This baffle 18 is arranged to make the flue gas stream circulates in countercurrent in the flue gas circulation tube. Here, the baffle 18 comprises an inner tube arranged inside de flue gas circulation tube 7.

The flue gas circulation tube 7 is configured to make the flue gas stream circulates in a first portion, here the portion surrounding the inner tube, of said flue gas circulation tube 7 between the flue gas entry 17 and the turn 24in a first direction. The flue gas circulation tube 7 is configured to make the flue gas stream circulates in a second portion, here inside the inner tube, of said flue gas circulation tube 7 between the turn 24 and the flue gas outlet 5 in an opposite direction to the first direction.

The flue gas circulation tube 7 is arranged to discharge heat of the flue gas to the feedstock gas circulation duct in the first portion and thus to obtain a cooled flue gas 20 which circulates in the second portion of the flue gas circulation tube.

The inner tube is made of a thermal insulating material in order to optimize the heat exchange between the flue gas circulation tubes 7 and the feedstock gas circulation duct 8.

The flue gas circulation tubes 7 are fixed by one of their extremities to the support, the other extremity being a free extremity 21. Thus, the flue gas circulation tubes can expand due to the high temperature of the endothermic reaction without putting stress on the cylindrical reaction tank.

The feedstock gas circulation duct 8 comprises a reaction zone B filled with a catalyst 10, configured to allow an endothermic reaction of the feedstock gas, such as a cracking reaction. The apparatus 1 comprises a preheating zone A, said preheating zone A being arranged for pre-heating the feedstock gas stream, said pre-heating zone being arranged upstream the reaction zone in the direction of the feedstock gas stream circulation.

The apparatus comprises a feedstock gas inlet 6 for the inlet of the feedstock gas into the feedstock gas circulation duct. The feedstock gas inlet 6 is arranged to make the feedstock gas stream circulate in the pre-heating zone A upstream the reaction zone B. The feedstock gas inlet 6 is arranged in the pre-heating zone side of the feedstock gas circulation duct 8.

The cylindrical reaction tank 2 comprises a synthesis gas product collector 9 arranged to collect the synthesis gas product produced in the reaction zone B, said collector 9 comprising a synthesis gas product outlet 15. The collector is delimited by a convex bottom. The synthesis gas product collector 9 is arranged in the cylindrical reaction tank 2 between the reaction zone B and the synthesis gas product outlet 15. The feedstock gas inlet 6 and the synthesis gas product outlet 15 are arranged to make the gas feedstock stream circulate all along the feedstock gas circulation duct 8.

In this embodiment, the burner 3 is located outside the cylindrical. The flue gas inlet 13 is at the same side as the feedstock gas inlet 6. Thus, the flue gas stream circulates first along the pre-heating zone A of the feedstock gas circulation duct 8 for pre-heating the feedstock gas stream upstream the reaction zone B.

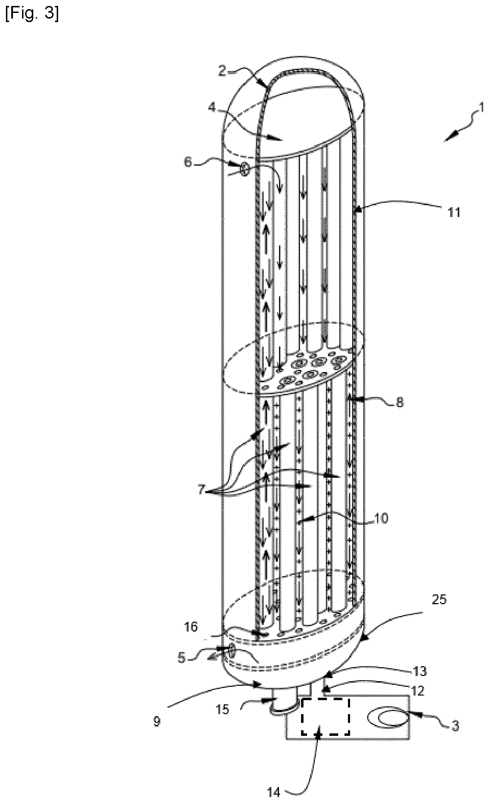

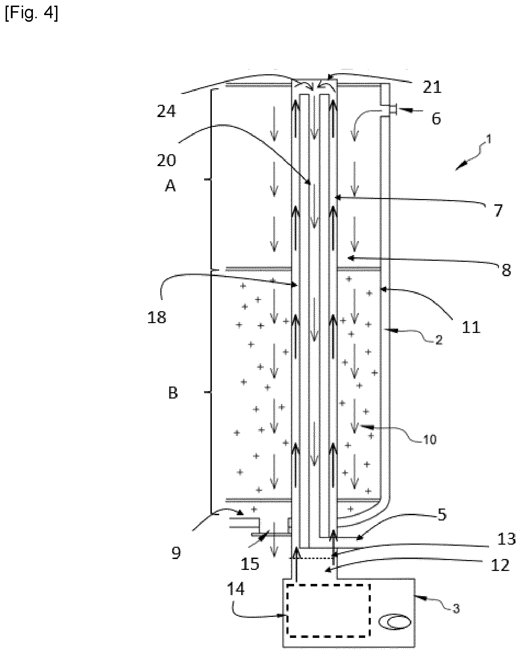

Figures 3 and 4 show an apparatus according a second embodiment in which the burner 3 is located outside the cylindrical reaction tank 2. In this embodiment, the flue gas inlet 12 side of the cylindrical reaction tank is opposite to the feedstock gas inlet 6 side in the feedstock stream circulation flow. Thus, the flue gas stream circulates first along the reaction zone B to directly heat said zone.

## Claims

1. An apparatus (1) for producing a synthesis gas product comprising hydrogen by an endothermic reaction of a gas feedstock stream, said apparatus comprising:
- A cylindrical reaction tank (2) delimited by a cylinder shell, said cylinder shell having an inner layer (11), the cylinder tank comprising:
∘ A feedstock gas circulation duct (8) delimited by the inner layer (11),
∘ A flue gas circulation tube (7) arranged for the circulation of a flue gas stream and for a heat transfer from the flue gas circulation tube to the feedstock gas circulation duct,
- A burner (3) arranged outside the cylindrical reaction tank (2), said burner (3) being configured to burn a fuel gas stream in a combustion zone (14) and produce the flue gas stream, said burner being fluidically connected to the flue gas circulation tube (7).

2. An apparatus (1) according to claim 1, wherein the flue gas circulation tube (7) is separated from the feedstock gas circulation duct (8) by a wall, said wall being configured to allow heat exchanges between the flue gas circulation tube (7) and the feedstock gas circulation duct (8).

3. An apparatus (1) according to any of claim 1 or 2, wherein the flue gas circulation tube (7) is arranged inside the feedstock gas stream circulation duct (8).

4. An apparatus (1) according to any of claims 1 to 3, wherein the apparatus (1) comprises a plurality of flue gas circulation tubes (7), said flue gas circulation tubes extending axially parallel.

5. An apparatus (1) according to any of claims 1 to 4, wherein the flue gas circulation tube (7) and the feedstock gas circulation duct (8) are arranged in a co-annular manner.

6. An apparatus (1) according to any of claims 1 to 5, wherein the feedstock gas circulation duct (8) comprises a reaction zone (B) filled with a catalyst (10), configured to allow an endothermic cracking reaction of the feedstock gas.

7. An apparatus (1) according to claim 6, wherein it comprises a preheating zone (A), said preheating zone being arranged for pre-heating the feedstock gas stream, said pre-heating zone (A) being arranged upstream the reaction zone (B) in the direction of the feedstock gas stream circulation direction.

8. An apparatus (1) according to claim 7, wherein the pre-heating zone (A) and the reaction zone (B) are arranged to receive heat from the flue gas circulating in the flue gas circulation tube (7).

9. An apparatus (1) according to any of claims 1 to 8, wherein the cylindrical reaction tank (2) comprises a flue gas inlet (12) for the inlet of the flue gas into the cylindrical reaction tank (2) from the combustion zone (14).

10. An apparatus according to any of claims 1 to 9, wherein the flue gas circulation tube (7) comprises a baffle (18) arranged to form a turn (24) in said flue gas circulation tube (7).

11. An apparatus (1) according to claim 10, wherein the baffle (18) is arranged to make the flue gas circulate inside the flue gas circulation tube (7) in a first direction, modify the direction of the flue gas flow so as to make the flue gas circulate inside the tube in a second direction opposite to the first one.

12. An apparatus (1) according to any of claims 10 or 11, wherein the baffle (18) comprises an inner tube arranged inside de flue gas circulation tube (7).

13. An apparatus (1) according to any of claims 1 to 12, wherein the apparatus comprises a feedstock gas inlet (6) for the inlet of the feedstock gas into the feedstock gas circulation duct (8).

14. An apparatus (1) according to claim 13, wherein the flue gas inlet (12) is arranged at a side of the cylindrical reaction tank which is opposite to the feedstock gas inlet (6) side.

15. Use of an apparatus according to any of claims 1 to 14 for producing a synthesis gas product comprising hydrogen by an endothermic cracking reaction of an ammonia feedstock stream.
